# EUROPEAN PATENT SPECIFICATION

(11) **EP 4 525 622 B1**
(45) Date of publication and mention of the grant of the patent: **31.12.2025**
(21) Application number: 24709198.6
(22) Date of filing: 01.03.2024
(51) Int. Cl.: A21B 1/22, A21B 1/48, A21B 1/24

(54) **A HEATING DEVICE AND A TUNNEL OVEN FOR BAKING FOOD PRODUCTS COMPRISING SAID HEATING DEVICE**
HEIZVORRICHTUNG UND TUNNELOFEN ZUM BACKEN VON LEBENSMITTELPRODUKTEN MIT DIESER HEIZVORRICHTUNG
DISPOSITIF DE CHAUFFAGE ET FOUR TUNNEL POUR CUIRE DES PRODUITS ALIMENTAIRES COMPRENANT LEDIT DISPOSITIF DE CHAUFFAGE

(30) Priority: 06.03.2023 IT 202300004095
(43) Date of publication of application: 26.03.2025
(73) Proprietor: Gea Imaforni S.p.A., 37030 Colognola Ai Colli (VR) (IT)
(72) Inventor: SFORZINI, Jessica, 37030 Colognola Ai Colli (VR) (IT); FINETTO, Alessandro, 37030 Colognola Ai Colli (VR) (IT); ZANONI, Manuele, 37030 Colognola Ai Colli (VR) (IT); CORAZZA, Loris, 37030 Colognola Ai Colli (VR) (IT); DALLA RIVA, Walter, 37030 Colognola Ai Colli (VR) (IT)
(74) Representative: Dondi, Silvia
(86) International application number: PCT/IB2024/051998
(87) International publication number: WO 2024/184771

(56) References cited:
- WO-A1-02/03804
- US-A- 5 584 237
- US-A- 6 049 066
- US-A1- 2005 139 203
- US-A1- 2011 139 140

## Description

### Technical field

The present invention relates to a heating device, in particular for use in a tunnel oven for baking food products, such as biscuits, crackers, cookies, pastry products, etc.

The invention relates also to a tunnel oven comprising said heating device. A baking tunnel oven consists mainly of a baking chamber with a respective heating system and a conveyor belt enabling the transfer of the products to be baked.

### Background art

Tunnel ovens implementing a plurality of cooking modes are known, in particular radiation and/or conduction and/or convection mode. However, one mode is generally dominant on the others, depending on the type of products to be cooked.

In order to achieve a good cooking, the tunnel oven is composed by distinct parts which are assembled in a cascade, each part implementing a different cooking mode.

Document US 5,906,485 A discloses a tunnel-type conveyor oven having two types of heat sources. A plurality of radiant heaters is located transverse to and extend across the conveyor path. Each radiant heater includes an inner tube having a wall with a plurality of openings defined therethrough, an open first end and a second end. A burner is directed into the open first end of the inner tube. An outer tube is located around the inner tube. The outer tube has an outer surface which is adapted to radiate heat.

A convection heating system is also provided which includes an upper convection heater located above and extending across the conveyor path. The upper convection heater has an upper plenum with supply areas located between each of the radiant heaters. The supply areas each have a plurality of openings directed toward the conveyor path.

A lower convection heater is located below the conveyor path and includes a lower plenum having a plurality of openings directed toward the conveyor path.

Document WO 02/03804 A1 discloses a heating device according to the preamble of claim 1.

In this context, it is felt the need to provide a heating device, in particular for use in a tunnel oven for baking food products, which achieves a radiant and/or a convection mode.

### Disclosure of the invention

An object of the present invention is to propose a heating device, in particular for use in a tunnel oven for baking food products, which is more flexible and adaptable to bake different types of food products.

Another object of the present invention is to propose a heating device, in particular for use in a tunnel oven for baking food products, having a more compact structure than the known solutions.

Another object of the present invention is to propose a heating device and a tunnel oven for baking food products, which are more efficient than the known solutions.

The stated technical task and specified aims are substantially achieved by a heating device, in particular for use in a tunnel oven for baking food products, the heating device comprising:
- a first tubular element having a first set of through openings and delimiting an aspirating channel;
- a second tubular element having a second set of through openings and delimiting a blowing channel which is in fluid communication with the aspirating channel;
- a group of electric resistances arranged between the aspirating channel and the blowing channel;
- a fan operatively active on the first tubular element so as to suck air from an outer environment into the aspirating channel through the first set of through openings and route the sucked air towards the electric resistances and the blowing channel so that the air is distributed by the second set of through openings.

According to an aspect of the invention, the first tubular element has a main development direction that is parallel to a main development direction of the second tubular element.

In one embodiment of the invention, the first tubular element and the second tubular element are arranged side by side.

In particular, the first tubular element has an open end that faces the fan, and the second tubular element has an open end that faces the group of electric resistances. The fan and the group electric resistances are arranged close to each other and are interposed between the open end of the first tubular element and the open end of the second tubular element.

Preferably, the heating device further comprises a support for supporting the group of electric resistances and the fan.

In particular, the support is arranged so as to face both the open end of the first tubular element and the open end of the second tubular element.

According to one embodiment of the invention, the heating device further comprises a plurality of extension devices applied to one of the through opening of the second set of through openings.

According to the invention, the heating device comprises a further group of electric resistances arranged below the first and the second tubular elements.

The stated technical task and specified aims are substantially achieved by a tunnel oven comprising:
- a tunnel structure;
- at least one baking chamber within the tunnel structure;
- a conveyor belt for conveying the food products along a conveying direction, the conveyor belt being arranged inside the tunnel structure so as to pass through the baking chamber;
- at least one heating device according to the proposed invention, which is arranged in the baking chamber above the conveyor belt.

According to one embodiment of the invention, the first tubular element and the second tubular element of the heating device are substantially transversal to the conveying direction.

For example, the main development directions of the two tubular elements are substantially orthogonal to the conveying direction.

Preferably, the further group of electric resistances of the heating device faces the conveyor belt.

### Brief description of drawings

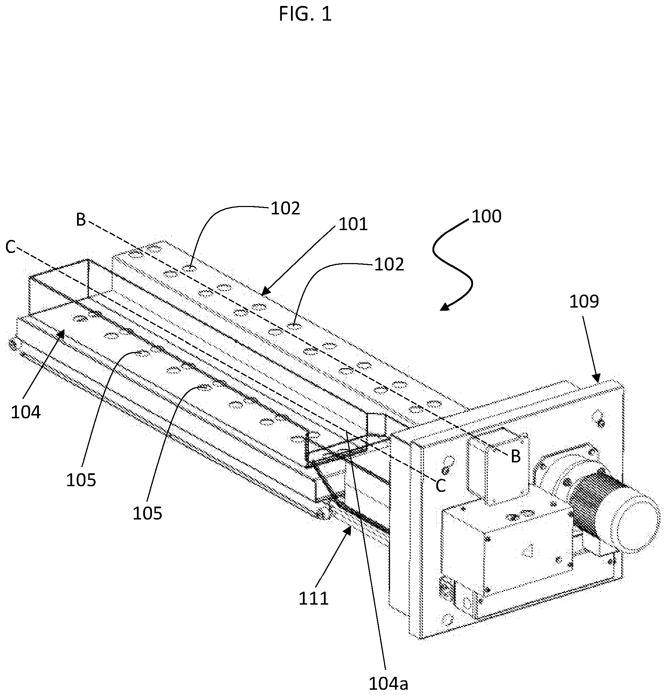

Further characteristics and advantages of the present invention will more fully emerge from the non-limiting description of a preferred but not exclusive embodiment of a heating device and a tunnel oven for baking food products comprising said heating device, as illustrated in the accompanying drawings in which
- figure 1 illustrates a heating device, in particular for use in a tunnel oven for baking food products, in a perspective view;

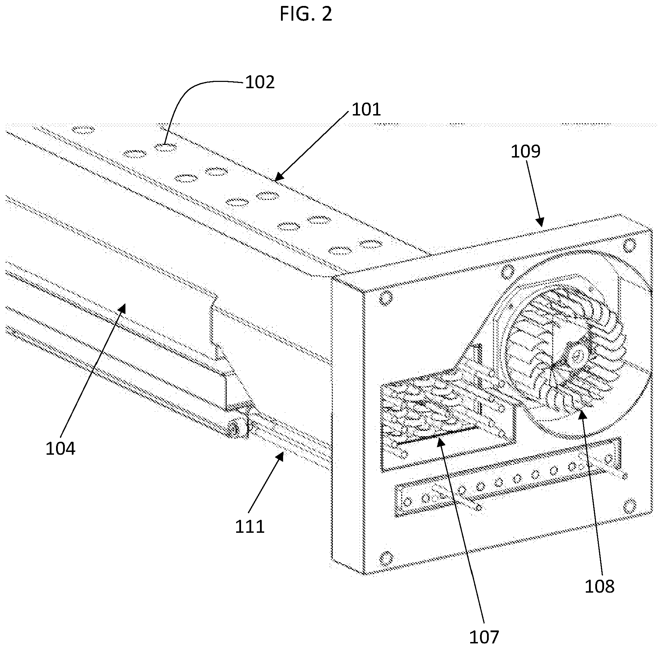

- figure 2 illustrates a front of the heating device of figure 1, where part of the case has been removed so as to illustrate some internal components;

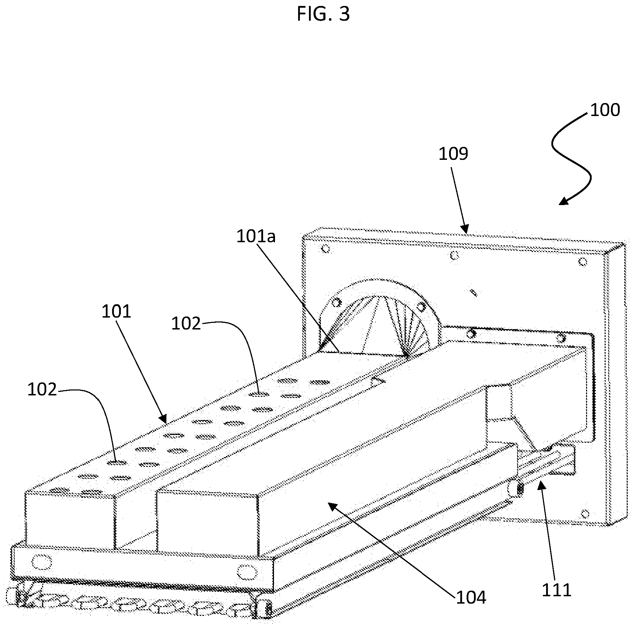

- figure 3 illustrates the heating device of figure 1, in another perspective view (from the back);
- figure 4 illustrates another embodiment of the heating device of figure 3;

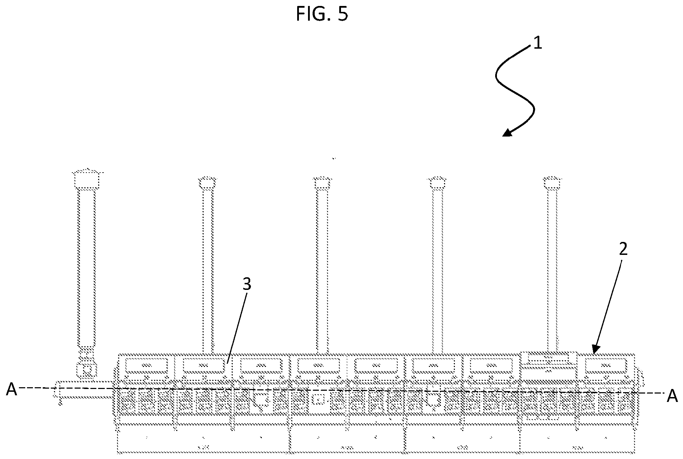

- figure 5 illustrates a tunnel oven for baking food products, according to the present invention, in a schematic lateral view;
- figure 6 illustrates a part (extension device) of the embodiment of figure 4;
- figure 7 illustrates a different embodiment of the extension device of figure 6.

### Detailed description of preferred embodiments of the invention

Reference numeral 100 denotes a heating device comprising:
- a first tubular element 101 having a first set of through openings 102 and delimiting an aspirating channel, and
- a second tubular element 104 having a second set of through openings 105 and delimiting a blowing channel which is in fluid communication with the aspirating channel.

According to one embodiment of the invention, the first tubular element 101 has a main development direction B-B that is parallel to a main development direction C-C of the second tubular element 104.

In particular, the first tubular element 101 and the second tubular element 104 are arranged side by side according to their main development directions B-B, C-C.

In a variant embodiment, not illustrated, the first tublar element 101 and the second tubular element 104 are arranged one above the other.

The heating device 100 further comprises a group of electric resistances 107 and a fan 108.

The group of electric resistances 107 is dimensioned to provide the power needed on the basis of the food products to be baked.

For example, the group of electric resistances 107 has a nominal power of 9 kW.

In particular, the group of electric resistances 107 is arranged between the aspirating channel and the blowing channel.

The fan 108 is operatively active on the first tubular element 101 so as to suck air from an outer environment into the aspirating channel through the first set of through openings 102 and route the sucked air towards the electric resistances 107 and the blowing channel.

In this context, the outer environment is an environment that is oustide the tubular element 101. In particular, the outer environment is located in the baking chamber 3.

Then, the sucked air arrived at the blowing channel is distributed, i.e., emitted, through the second set of through openings 105.

In other words, the second set of through openings 105 constitutes an air knife system that emits a plurality of air jets.

According to embodiment of the invention, the first tubular element 101 has an open end 101a that faces the fan 108, and the second tubular element 104 has an open end 104a that faces the group of electric resistances 107.

In particular, the group of electric resistances 107 and the fan 108 are arranged close to each other.

According to an aspect of the invention, the heating device 100 comprises a support 109 for supporting the group of electric resistances 107 and the fan 108.

The support 109 is arranged so that it faces both the open end 101a of the first tubular element 101 and the open end 104a of the second tubular element 104.

In particular, the electric resistances 107 and the fan 108 are interposed between the open end 101a of the first tubular element 101 and the open end 104a of the second tubular element 104.

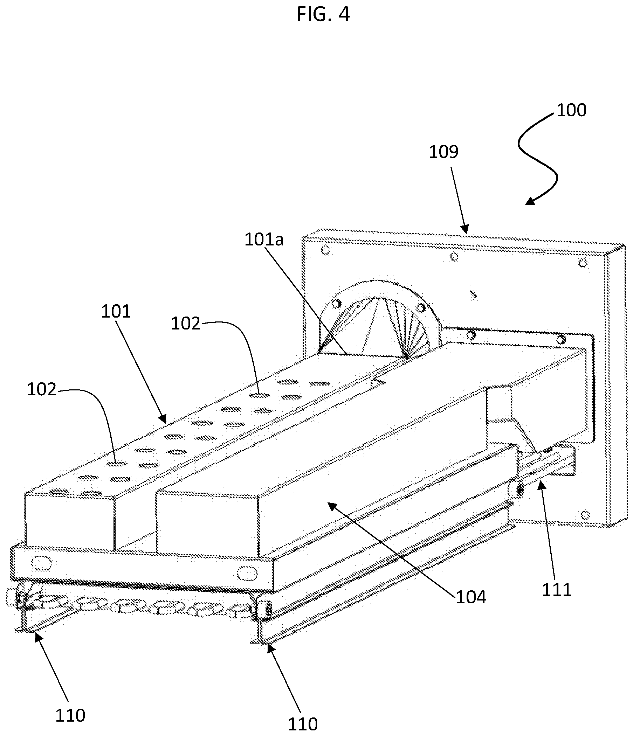

According to one embodiment of the invention, illustrated in figure 4, the heating device 100 further comprises a plurality of extension devices 110 applied to the through openings of the second set of through openings 105.

As it will be better explained later, the extension devices 110 allow to direct the air jets closer to the products to be baked.

In the embodiment disclosed in figure 4 each extension device 110 is configured and shaped so as to produce an air knife. In particular, each extension device 110 comprises a pair of plates which are applied to a row of through openings of the second set of through openings 105.

In this context, said plates have a main development which is parallel to the main development directions B-B, C-C. The height of the plates is the extension or dimension of the plates in a direction which is orthogonal to the main development directions B-B, C-C.

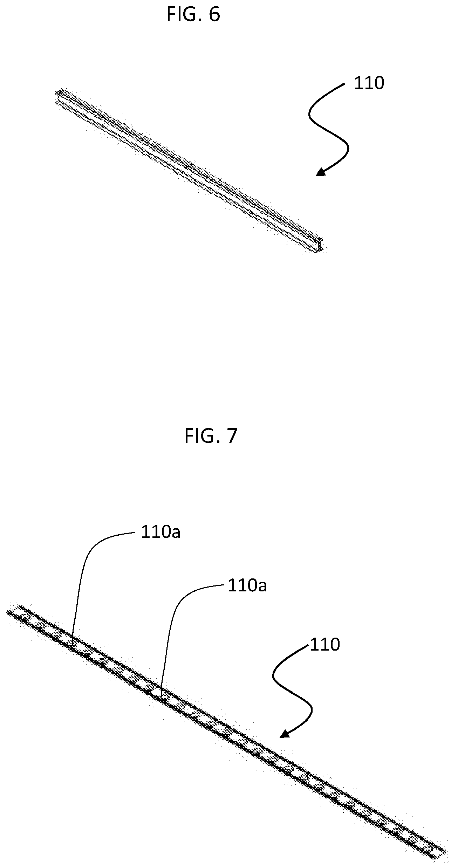

In the embodiment illustrated in figure 4 and more specifically in figure 6, the plates of each extension device 110 are mutually parallel at least for a tract and arranged oppositely with respect to the row so as to channel the air jets closer to the products to be baked.

Preferably, the shape and dimensions of the through openings of the second set of through openings 105 are configurable so as to vary the shape of the air jets.

In another embodiment, not shown, the plates of each extension device 110 are not parallel to each other.

According to one aspect of the invention, the height of the plates of each extension device 110 may be set depending on the specific application.

As a matter of fact, some applications may require a closer distance from the products to be baked, whereas other applications may require a higher distance.

According to another embodiment, shown in figure 7, each extension device 110 comprises a single plate which is applied to a row of through openings of the second set of through openings 105.

Preferably, said plate has a plurality of through holes 110a acting as nozzles. In figure 7 the through holes 110a are circular, but they can have other shapes.

According to the invention, the heating device 100 comprises a further group of electric resistances 111 arranged below the first and the second tubular elements 101, 104.

Preferably the further group of electric resistances 111 is mounted on the support 109 and has a main extension that is parallel to the main development directions B-B, C-C.

The further group of electric resistances 111 generates heating by radiation. The group is dimensioned to provide the power needed on the basis of the food products to be baked.

For example, the further group of electric resistances 111 has a nominal power of 18 kW.

Advantageously, the heating device 100 is designed to provide one of the following heating or cooking modes:
- a convection mode;
- a radiant mode;
- a mixed mode, which is a combination of convection and radiant mode. In the convection mode, the air is sucked from the outer environment into the aspirating channel by the fan 108. The air enters the aspirating channel by means of the first set of through openings 102.

The fan 108 directs the aspirated air towards the first group of resistances 107 that is turned on and is configured to heat the air. The heated air arrives to the blowing channel and is distributed outside by means of the second set of through openings 105. In the convection mode, the further group of electric resistances 111 is turned off.

In the radiant mode, the fan 108 is not actuated, so no air is sucked. The further group of electric resistances 111 are heated so that the products can be cooked by radiations.

In the mixed mode, the fan 108 is actuated, so the air is sucked and distributed by the second set of through openings 105. In this mode, the further group of electric resistances 111 is turned on an emits radiations.

Reference numeral 1 denotes a tunnel oven in particular for baking food products that are continuously fed inside the tunnel.

The tunnel oven 1 comprises a tunnel structure 2 containing at least one baking chamber 3. The baking chamber 3 defines a process zone in which the food products are baked.

Food products are advanced along a conveying direction A-A by a conveyor belt arranged within the tunnel structure 2 in such a way as to pass through the baking chamber 3.

According to one aspect of the invention, the conveyor belt is an endless belt. For example, the conveyor belt is a grid conveyor belt or a mesh conveyor belt of the known type.

The tunnel structure 2 has an inlet for the receiving the food products to be baked, and an outlet for delivering the baked food products.

Preferably, a feed unit for feeding products to be baked is positioned upstream of the tunnel oven 1 so as to feed the inlet.

Preferably, a unit for picking up the baked products is positioned downstream the tunnel oven 1, in particular at the outlet of the tunnel structure 2.

The tunnel oven 1 comprises at least one heating device 100 according to the proposed invention.

In particular, the heating device 100 is mounted in the baking chamber 3 of tunnel oven 1 so as to develop transversally to the conveying direction A-A.

In particular the main development directions B-B, C-C of the two tubular elements 101, 104 are substantially orthogonal to the conveying direction A-A.

In particular, the heating device 100 is arranged above the conveyor belt. The further group of electric resistances 111 preferably faces the conveyor belt.

Thus, the heating device 100 is configured to radiate the products advancing on the conveyor belt by means of the further group of electric resistances 111 and/or to send air jets towards the products advancing on the conveyor belt in the baking chamber 3.

The characteristics of a heating device and of a tunnel oven for baking food products comprising said heating device, according to the present invention, are clear, as are the advantages.

In particular, the proposed heating device allows to obtain a plurality of cooking modes (by convection, by radiation or by both) in a compact design.

In particular, heating by convection is obtained thanks to two tubular elements, a fan and the electric resistances which cooperate together to create heated air jets to be directed towards the products to be cooked. Heating by radiations is obtained by another group of electric resistances, which may be turned on solely or in combination with the convection mode.

Thus, the proposed solution is flexible and adaptable to any baking applications.

In addition, the air jets can be shaped by changing the shape and the dimensions of the through openings of the second tubular element.

Furthermore, the extension devices allow to direct the air closer to the products.

Thus, the tunnel oven comprising the proposed heating device achieves a more efficient heating of the products.

## Claims

1. A heating device (100), in particular for use in a tunnel oven (1) for baking food products, said heating device (100) comprising:
- a first tubular element (101) having a first set of through openings (102) and delimiting an aspirating channel;
- a second tubular element (104) having a second set of through openings (105) and delimiting a blowing channel which is in fluid communication with the aspirating channel;
- a group of electric resistances (107) arranged between the aspirating channel and the blowing channel;
- a fan (108) operatively active on said first tubular element (101) so as to suck air from an outer environment into the aspirating channel through the first set of through openings (102) and route the sucked air towards the electric resistances (107) and the blowing channel so that the air is distributed by the second set of through openings (105),
**characterized in that** it comprises a further group of electric resistances (111) arranged below the first and the second tubular elements (101, 104).

2. The heating device (100) according to claim 1, wherein the first tubular element (101) has a main development direction (B-B) that is parallel to a main development direction (C-C) of the second tubular element (104).

3. The heating device (100) according to claim 1 or 2, wherein the first tubular element (101) and the second tubular element (104) are arranged side by side.

4. The heating device (100) according to any one of the preceding claims, wherein the first tubular element (101) has an open end (101a) that faces said fan (108), and the second tubular element (104) has an open end (104a) that faces said group of electric resistances (107), the fan (108) and the group electric resistances (107) being arranged close to each other and being interposed between the open end (101a) of the first tubular element (101) and the open end (104a) of the second tubular element (104).

5. The heating device (100) according to claim 4, further comprising a support (109) for supporting said group of electric resistances (107) and said fan (108).

6. The heating device (100) according to claim 5, wherein the support (109) is arranged so as to face both the open end (101a) of the first tubular element (101) and the open end (104a) of the second tubular element (104).

7. The heating device (100) according to any one of the preceding claims, further comprising a plurality of extension devices (110) applied to the through opening of the second set of through openings (105).

8. The heating device (100) according to claim 7, wherein each extension device of the plurality of extension devices (110) is configured to provide an air knife.

9. The heating device (100) according to claim 8, wherein each extension device of the plurality of extension devices (110) comprises a pair of plates which are applied to a row of through openings of the second set of through openings (105).

10. The heating device (100) according to claim 9, whereain said plates are parallel.

11. The heating device (100) according to any one of the claims 1 to 7, wherein each extension device of the plurality of extension devices (110) comprises a single plate applied to a row of through openings of the second set of through openings (105), said plate having a plurality of through holes (110a) acting as nozzles.

12. A tunnel oven (1) for baking food products, sadi tunnel oven (1) comprising:
- a tunnel structure (2);
- at least one baking chamber (3) within the tunnel structure (2);
- a conveyor belt for conveying the food products along a conveying direction (A-A), the conveyor belt being partially arranged inside the tunnel structure (2) so as to pass through the baking chamber (3);
- at least one heating device (100) according to any one of the preceding claims, which is arranged in the baking chamber (3) over the conveyor belt.

13. The tunnel oven (1) according to claim 12, wherein the first tubular element (101) and the second tubular element (104) of the heating device (100) are substantially transversal to the conveying direction (A-A).

14. The tunnel oven (1) according to claim 13, wherein main development directions (B-B, C-C) of the two tubular elements (101, 104) are substantially orthogonal to the conveying direction (A-A).

15. The tunnel oven (1) according to any one of claims 12 to 14, wherein the further group of electric resistances (111) of the heating device (100) faces the conveyor belt.

## Patentansprüche

1. Heizvorrichtung (100), insbesondere für die Nutzung in einem Tunnelofen (1) zum Backen von Lebensmittelprodukten, wobei die Heizvorrichtung (100) Folgendes umfasst:
- ein erstes rohrförmiges Element (101), aufweisend einen ersten Satz von Durchführungsöffnungen (102) und begrenzend einen Ansaugkanal;
- ein zweites rohrförmiges Element (104), aufweisend einen zweiten Satz von Durchführungsöffnungen (105) und begrenzend einen Blaskanal, der in Fluidkommunikation mit dem Ansaugkanal steht;
- eine Gruppe elektrischer Widerstände (107), die zwischen dem Ansaugkanal und dem Blaskanal angeordnet sind;
- ein Gebläse (108), das betriebswirksam auf dem ersten rohrförmigen Element (101) aktiv ist, sodass Luft von einer äußeren Umgebung durch den ersten Satz von Durchführungsöffnungen (102) in den Ansaugkanal gesaugt wird und die gesaugte Luft hinführend zu den elektrischen Widerständen (107) und dem Blaskanal geleitet wird, sodass die Luft durch den zweiten Satz von Durchführungsöffnungen (105) verteilt wird,
**dadurch gekennzeichnet, dass** sie eine weitere Gruppe von elektrischen Widerständen (111) umfasst, die unter dem ersten und dem zweiten rohrförmigen Element (101, 104) angeordnet sind.

2. Heizvorrichtung (100) nach Anspruch 1, wobei das erste rohrförmige Element (101) eine Hauptentwicklungsrichtung (B-B) aufweist, die parallel zu einer Hauptentwicklungsrichtung (C-C) des zweiten rohrförmigen Elements (104) angeordnet ist.

3. Heizvorrichtung (100) nach Anspruch 1 oder 2, wobei das erste rohrförmige Element (101) und das zweite rohrförmige Element (104) nebeneinander angeordnet sind.

4. Heizvorrichtung (100) nach einem der vorhergehenden Ansprüche, wobei das erste rohrförmige Element (101) ein offenes Ende (101a) aufweist, das dem Gebläse (108) zugewandt ist, und das zweite rohrförmige Element (104) ein offenes Ende (104a) aufweist, das der Gruppe von elektrischen Widerständen (107) zugewandt ist, wobei das Gebläse (108) und die Gruppe elektrischer Widerstände (107) nah einander angeordnet sind und zwischen dem offenen Ende (101a) des ersten rohrförmigen Elements (101) und dem offenen Ende (104a) des zweiten rohrförmigen Elements (104) eingesetzt sind.

5. Heizvorrichtung (100) nach Anspruch 4, ferner umfassend eine Stütze (109) zum Stützen der Gruppe von elektrischen Widerständen (107) und des Gebläses (108).

6. Heizvorrichtung (100) nach Anspruch 5, wobei die Stütze (109) derart angeordnet ist, dass sie sowohl dem offenen Ende (101a) des ersten rohrförmigen Elements (101) als auch dem offenen Ende (104a) des zweiten rohrförmigen Elements (104) zugewandt ist.

7. Heizvorrichtung (100) nach einem der vorhergehenden Ansprüche, ferner umfassend eine Vielzahl von Ausdehnungsvorrichtungen (110), die an der Durchführungsöffnung des zweiten Satzes von Durchführungsöffnungen (105) angebracht sind.

8. Heizvorrichtung (100) nach Anspruch 7, wobei eine jede Ausdehnungsvorrichtung der Vielzahl von Ausdehnungsvorrichtungen (110) ausgelegt ist, um ein Luftschwert bereitzustellen.

9. Heizvorrichtung (100) nach Anspruch 8, wobei eine jede Ausdehnungsvorrichtung der Vielzahl von Ausdehnungsvorrichtungen (110) ein Paar Platten umfasst, die auf einer Reihe von Durchführungsöffnungen des zweiten Satzes von Durchführungsöffnungen (105) angebracht sind.

10. Heizvorrichtung (100) nach Anspruch 9, wobei die Platten parallel sind.

11. Heizvorrichtung (100) nach einem der Ansprüche 1 bis 7, wobei eine jede Ausdehnungsvorrichtung der Vielzahl von Ausdehnungsvorrichtungen (110) eine einzelne Platte umfasst, die auf einer Reihe von Durchführungsöffnungen des zweiten Satzes von Durchführungsöffnungen (105) angebracht ist, wobei die Platte eine Vielzahl von Durchführungslöchern (110a) aufweist, die als Düsen wirken.

12. Tunnelofen (1) zum Backen von Lebensmittelprodukten, wobei der Tunnelofen (1) Folgendes umfasst:
- eine Tunnelstruktur (2);
- mindestens einen Backraum (3) innerhalb der Tunnelstruktur (2);
- ein Förderband zum Fördern der Lebensmittelprodukte entlang einer Förderrichtung (A-A), wobei das Förderband teilweise innerhalb der Tunnelstruktur (2) angeordnet ist, sodass es durch den Backraum (3) führt;
- mindestens eine Heizvorrichtung (100) nach einem der vorhergehenden Ansprüche, die in dem Backraum (3) über dem Förderband angeordnet ist.

13. Tunnelofen (1) nach Anspruch 12, wobei das erste rohrförmige Element (101) und das zweite rohrförmige Element (104) der Heizvorrichtung (100) im Wesentlichen quer zur Förderrichtung (A-A) angeordnet sind.

14. Tunnelofen (1) nach Anspruch 13, wobei die Hauptentwicklungsrichtungen (B-B, C-C) der beiden rohrförmigen Elemente (101, 104) im Wesentlichen rechtwinkelig zur Förderrichtung (A-A) verlaufen.

15. Tunnelofen (1) nach einem der Ansprüche 12 bis 14, wobei die weitere Gruppe von elektrischen Widerständen (111) der Heizvorrichtung (100) dem Förderband zugewandt ist.

## Revendications

1. Dispositif de chauffage (100), en particulier pour une utilisation dans un four tunnel (1) pour cuire des produits alimentaires, ledit dispositif de chauffage (100) comprenant :
- un premier élément tubulaire (101) ayant un premier ensemble d'ouvertures traversantes (102) et délimitant un canal d'aspiration ;
- un second élément tubulaire (104) ayant un second ensemble d'ouvertures traversantes (105) et délimitant un canal de soufflage qui est en communication fluidique avec le canal d'aspiration ;
- un groupe de résistances électriques (107) agencées entre le canal d'aspiration et le canal de soufflage ;
- un ventilateur (108) fonctionnellement actif sur ledit premier élément tubulaire (101) de manière à aspirer l'air en provenance d'un environnement extérieur dans le canal d'aspiration à travers le premier ensemble d'ouvertures traversantes (102) et à acheminer l'air aspiré vers les résistances électriques (107) et le canal de soufflage de sorte que l'air soit distribué par le second ensemble d'ouvertures traversantes (105),
**caractérisé en ce qu'**il comprend un autre groupe de résistances électriques (111) agencées sous les premier et second éléments tubulaires (101, 104).

2. Dispositif de chauffage (100) selon la revendication 1, dans lequel le premier élément tubulaire (101) a une direction de développement principale (B-B) qui est parallèle à une direction de développement principale (C-C) du second élément tubulaire (104).

3. Dispositif de chauffage (100) selon la revendication 1 ou 2, dans lequel le premier élément tubulaire (101) et le second élément tubulaire (104) sont agencés côte à côte.

4. Dispositif de chauffage (100) selon l'une quelconque des revendications précédentes, dans lequel le premier élément tubulaire (101) a une extrémité ouverte (101a) qui fait face audit ventilateur (108), et le second élément tubulaire (104) a une extrémité ouverte (104a) qui fait face audit groupe de résistances électriques (107), le ventilateur (108) et le groupe de résistances électriques (107) étant agencés à proximité les uns des autres et étant interposés entre l'extrémité ouverte (101a) du premier élément tubulaire (101) et l'extrémité ouverte (104a) du second élément tubulaire (104).

5. Dispositif de chauffage (100) selon la revendication 4, comprenant en outre un support (109) pour supporter ledit groupe de résistances électriques (107) et ledit ventilateur (108).

6. Dispositif de chauffage (100) selon la revendication 5, dans lequel le support (109) est agencé de manière à faire face à la fois à l'extrémité ouverte (101a) du premier élément tubulaire (101) et à l'extrémité ouverte (104a) du second élément tubulaire (104).

7. Dispositif de chauffage (100) selon l'une quelconque des revendications précédentes, comprenant en outre une pluralité de dispositifs d'extension (110) appliqués à l'ouverture traversante du second ensemble d'ouvertures traversantes (105).

8. Dispositif de chauffage (100) selon la revendication 7, dans lequel chaque dispositif d'extension de la pluralité de dispositifs d'extension (110) est configuré pour fournir une lame d'air.

9. Dispositif de chauffage (100) selon la revendication 8, dans lequel chaque dispositif d'extension de la pluralité de dispositifs d'extension (110) comprend une paire de plaques qui sont appliquées à une rangée d'ouvertures traversantes du second ensemble d'ouvertures traversantes (105).

10. Dispositif de chauffage (100) selon la revendication 9, dans lequel lesdites plaques sont parallèles.

11. Dispositif de chauffage (100) selon l'une quelconque des revendications 1 à 7, dans lequel chaque dispositif d'extension de la pluralité de dispositifs d'extension (110) comprend une plaque unique appliquée à une rangée d'ouvertures traversantes du second ensemble d'ouvertures traversantes (105), ladite plaque ayant une pluralité de trous traversants (110a) agissant comme des buses.

12. Four tunnel (1) pour cuire des produits alimentaires, ledit four tunnel (1) comprenant :
- une structure tunnel (2) ;
- au moins une chambre de cuisson (3) à l'intérieur de la structure tunnel (2) ;
- une bande transporteuse pour transporter les produits alimentaires le long d'une direction de transport (A-A), la bande transporteuse étant partiellement agencée à l'intérieur de la structure tunnel (2) de manière à traverser la chambre de cuisson (3) ;
- au moins un dispositif de chauffage (100) selon l'une quelconque des revendications précédentes, qui est agencé dans la chambre de cuisson (3) au-dessus de la bande transporteuse.

13. Four tunnel (1) selon la revendication 12, dans lequel le premier élément tubulaire (101) et le second élément tubulaire (104) du dispositif de chauffage (100) sont substantiellement transversaux à la direction de transport (A-A).

14. Four tunnel (1) selon la revendication 13, dans lequel les directions de développement principales (B-B, C-C) des deux éléments tubulaires (101, 104) sont substantiellement orthogonales à la direction de transport (A-A).

15. Four tunnel (1) selon l'une quelconque des revendications 12 à 14, dans lequel l'autre groupe de résistances électriques (111) du dispositif de chauffage (100) fait face à la bande transporteuse.
